# EUROPÄISCHE PATENTSCHRIFT

(11) **EP 3 575 154 B1**
(45) Veröffentlichungstag und Bekanntmachung des Hinweises auf die Patenterteilung: **21.07.2021**
(21) Anmeldenummer: 19176087.5
(22) Anmeldetag: 23.05.2019
(51) Int. Cl.: B60R 15/00, B60P 3/36

(54) **INNENAUSBAUVORRICHTUNG**
INTERIOR CONSTRUCTION DEVICE
DISPOSITIF D´AMÉNAGEMENT INTÉRIEUR

(30) Priorität: 30.05.2018 DE 102018112981
(43) Veröffentlichungstag der Anmeldung: 04.12.2019
(73) Patentinhaber: Scolotech GmbH, 88709 Meersburg (DE)
(72) Erfinder:
(74) Vertreter: Daub, Thomas

(56) Entgegenhaltungen:
- EP-A1- 2 813 394
- EP-A1- 2 813 398
- DE-A1-102005 021 702
- DE-A1-102016 102 301
- DE-B- 1 192 937
- DE-U1- 29 600 388
- DE-U1-202015 100 260

## Beschreibung

### Stand der Technik

Die Erfindung betrifft ein Wohnfahrzeug nach dem Oberbegriff des Anspruchs 1, sowie ein Verfahren nach dem Oberbegriff des Anspruchs 15. Aus der EP 2 813 398 A1 sind ein solches Wohnfahrzeug sowie ein solches Verfahren bekannt.

Es ist bereits eine Innenausbauvorrichtung mit zumindest einer Türeinheit, welche zumindest ein erstes Türelement und zumindest ein zweites Türelement umfasst, vorgeschlagen worden.

Die Aufgabe der Erfindung besteht insbesondere darin, ein gattungsgemäßes Wohnfahrzeug mit verbesserten Eigenschaften hinsichtlich einer Flexibilität, insbesondere in Bezug auf eine Raumaufteilung, bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Innenausbauvorrichtung für ein Wohnfahrzeug, welche wahlweise zu einer zumindest teilweisen Trennung eines ersten Raumbereichs und eines zweiten Raumbereich des Wohnfahrzeugs vorgesehen ist, mit zumindest einer bewegbaren Türeinheit, welche von zumindest einer ersten Türposition in zumindest einer zweiten Türposition bewegbar ist und welche zumindest ein erstes Türelement und zumindest ein zweites Türelement, welches mit dem ersten Türelement zumindest mittelbar gekoppelt ist, aufweist.

Es wird vorgeschlagen, dass in der ersten Türposition das zweite Türelement relativ zum ersten Türelement unbeweglich befestigt ist und in der zweiten Türposition das zweite Türelement relativ zum ersten Türelement bewegbar ist. Hierdurch kann insbesondere eine Flexibilität einer Raumaufteilung verbessert werden. Vorteilhaft kann ein Benutzerkomfort, insbesondere in Bezug auf ein Raumgefühl erzielt werden, wie dies beispielsweise bei einer Hotelsuite der Fall ist. Weiterhin kann sowohl eine besonders vorteilhafte Zugänglichkeit als auch eine Trennung von Raumbereichen untereinander erzielt werden. Des Weiteren kann eine besonders kompakte Anordnung bereitgestellt und somit ein Bauraum reduziert werden.

Unter einer "Innenausbauvorrichtung" für ein Wohnfahrzeug soll insbesondere eine Vorrichtung verstanden werden, welche zu einem Innenausbau eines Wohnfahrzeugs vorgesehen ist. Die Innenausbauvorrichtung ist insbesondere ein funktionstüchtiger, Bestandteil, insbesondere eine Konstruktions- und/oder Funktionskomponente, eines Innenausbaus. Die Innenausbauvorrichtung kann einen Innenausbau zumindest teilweise, vorzugsweise zumindest zu einem Großteil und besonders bevorzugt vollständig ausbilden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter dem Ausdruck "zumindest zu einem Großteil" soll dabei insbesondere zumindest zu 55 %, vorteilhaft zumindest zu 65 %, vorzugsweise zumindest zu 75 %, besonders bevorzugt zumindest zu 85 % und besonders vorteilhaft zumindest zu 95 % und insbesondere aber auch vollständig verstanden werden. Unter einem "Wohnfahrzeug" soll insbesondere ein Wohnmobil, ein Wohnwagen und/oder ein Kastenwagen verstanden werden. Unter einem "Raumbereich" soll insbesondere ein Sanitärbereich, insbesondere ein Duschbereich und/oder Waschbereich, ein Schlafbereich, ein Wohnbereich, ein Küchenbereich und/oder ein Essbereich verstanden werden. Vorzugsweise ist der erste Raumbereich ein Sanitärbereich. Der Sanitärbereich umfasst vorteilhaft zumindest eine Toilette und/oder ein Waschbecken. Weiter bevorzugt ist der zweite Raumbereich ein Schlafbereich und umfasst zumindest ein Bett, vorzugsweise ein Doppelbett. Unter einer zumindest "teilweisen Trennung" eines ersten Raumbereichs und eines zweiten Raumbereichs soll insbesondere verstanden werden, dass ein Durchgang zwischen zumindest dem ersten Raumbereich und dem zweiten Raumbereich zumindest teilweise, vorzugsweise zumindest zu einem Großteil und besonders bevorzugt vollständig ausbildet. Vorzugsweise ist die Innenausbauvorrichtung zu einer zumindest zu einem Großteil und besonders bevorzugt vollständigen wahlweisen Trennung des Raumbereichs vorgesehen. Unter einer "Türeinheit" soll in diesem Zusammenhang insbesondere eine Einheit verstanden werden, die zu einem wahlweisen zumindest teilweisen Verschließen oder Öffnen von zumindest einem Durchgang zwischen zumindest zwei voneinander trennbaren Raumbereichen vorgesehen ist. Die Türeinheit umfasst vorzugsweise zumindest zwei, vorzugsweise zumindest drei und besonders bevorzugt eine Vielzahl an Türelementen. Insbesondere umfasst die Türeinheit höchstens drei und vorzugsweise höchstens zwei Türelemente. Besonders bevorzugt umfasst die Türeinheit genau zwei Türelemente. Unter einem "Türelement" soll in diesem Zusammenhang insbesondere ein Türblatt, ein Gitter und/oder ein Plissee verstanden werden. Vorteilhaft ist das Türelement zumindest teilweise aus Holz, einem Blech, einem Kunststoff, aus Glas, aus Papier, aus Pappe und/oder aus einem Textilmaterial ausgebildet. Eine Grundfläche des ersten Türelements ist insbesondere zumindest im Wesentlichen identisch zu einer Grundfläche des zweiten Türelements. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht. Unter "zumindest im Wesentlichen identisch" soll insbesondere bis auf Herstellungs- und/oder Montagetoleranzen identisch verstanden werden. Alternativ kann eine Grundfläche des ersten Türelements größer und vorzugsweise wesentlich größer sein als eine Grundfläche des zweiten Türelements. Unter "Wesentlich größer" soll insbesondere zumindest um 25 %, vorzugsweise um 35 % und besonders bevorzugt zumindest um 45 % größer verstanden werden. Das erste Türelement und das zweite Türelement sind vorzugsweise derart zueinander angeordnet, dass eine Außenseite des ersten Türelements dem zweiten Raumbereich zugewandt ist, eine Innenseite des ersten Türelements dem ersten Raumbereich zugewandt ist, eine Außenseite des zweiten Türelements dem ersten Raumbereich zugewandt ist, eine Innenseite des zweiten Türelements dem zweiten Raumbereich zugewandt ist und/oder die Innenseite des ersten Türelements der Innenseite des zweiten Türelements zugewandt ist. Unter einer Türposition der Türeinheit soll insbesondere eine spezielle Position der Türeinheit verstanden werden. Darunter, dass "zwei Objekte zumindest mittelbar gekoppelt sind" soll insbesondere verstanden werden, dass dies zumindest durch ein weiteres Objekt miteinander vorzugsweise zumindest teilweise zueinander beweglich miteinander verbunden sind. Ferner soll unter mittelbar gekoppelt auch unmittelbar gekoppelt verstanden werden. Die Türelemente sind insbesondere zueinander bewegbar gekoppelt, um zumindest in einer ersten Türstellung und zumindest einer zweiten Türstellung anordenbar zu sein. Unter einer "Türstellung" soll insbesondere eine spezielle Stellung eines ersten Türelements relativ zu einem zweiten Türelement der Türeinheit zueinander verstanden werden. Die Türeinheit weist insbesondere zur zumindest mittelbaren Kopplung des ersten Türelements und des zweiten Türelements zumindest eine Koppeleinheit auf. Die Koppeleinheit ist zumindest teilweise zwischen dem ersten Türelement und dem zweiten Türelement und zwar vorzugsweise an deren jeweiligen Innenseiten angeordnet. Die Koppeleinheit weist insbesondere zumindest ein erstes Koppelelement und zumindest ein zu dem ersten Koppelelement korrespondierend ausgebildetes zweites Koppelelement auf. Das erste Koppelelement ist insbesondere an dem ersten Türelement, insbesondere dessen Innenseite, angeordnet. Das zweite Koppelelement ist insbesondere dem zweiten Türelement, insbesondere dessen Innenseite, angeordnet. Die Koppelelemente sind vorzugsweise als ineinander greifende Auszugsschienen, vorzugsweise Teleskopauszugsschienen ausgebildet. Ferner kann die Koppeleinheit weitere Koppelelemente aufweisen, welche zumindest zwischen dem ersten und dem zweiten Koppelelement angeordnet sind, um beispielsweise eine Auszugslänge der Türelemente zueinander teleskopartig zu vergrößern. Unter einer "unbeweglichen Befestigung zweier Objekte" soll insbesondere verstanden werden, dass diese relativ zueinander in zumindest einem Betriebszustand frei von jeglichem Freiheitsgrad der Bewegung sind. Insbesondere in der ersten Türstellung der Türeinheit sind die Türelemente hintereinander angeordnet und unbeweglich zueinander befestigt. In der zweiten Türstellung sind das erste Türelement und das zweite Türelement zumindest teilweise zueinander verschoben. Vorzugsweise bildet die Türeinheit, insbesondere das zweite Türelement in Relation zum dem ersten Türelement, eine Schiebetür aus. Ferner ist denkbar, dass das zweite Türelement zu dem ersten Türelement drehbar und/oder verschwenkbar zueinander ausgebildet sein könnte.

Erfindungsgemäß ist die Türeinheit dazu vorgesehen, in der ersten Türposition die Raumbereiche frei zu geben und in der zweiten Türposition zumindest teilweise den ersten Raumbereich von dem zweiten Raumbereich zu trennen. Hierdurch kann vorteilhaft eine Flexibilität einer Raumaufteilung weiter verbessert werden. In der ersten Türposition ist die Türeinheit insbesondere in einem Nahbereich einer Innenausbauwand der Innenausbauvorrichtung angeordnet. Vorzugsweise liegt die Türeinheit zumindest mittelbar an der Innenausbauwand an. In der zweiten Türposition ist die Türeinheit vorzugsweise außerhalb des Nahbereichs der Innenausbauwand angeordnet. Unter einem "Nahbereich" eines Objekts soll insbesondere ein Bereich verstanden werden, welcher durch einen maximalen Abstand zu diesem Objekt von höchstens 30 cm, vorzugsweise höchstens 20 cm und besonders bevorzugt höchstens 10 cm definiert ist.

Des Weiteren wird vorgeschlagen, dass die Türeinheit von der ersten Türposition in die zweite Türposition durch zumindest eine Verschiebung der Türeinheit in einer Richtung quer zu deren Haupterstreckungsebene überführbar ist. Hierdurch kann eine besonders flexible Raumteilung erzielt werden. Unter einer "Haupterstreckungsebene" eines Objekts soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Unter "quer" soll vorzugsweise verschieden von zumindest im Wesentlichen parallel verstanden werden. Vorzugsweise soll unter "quer" zumindest im Wesentlichen senkrecht verstanden werden. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung und die Bezugsrichtung einen Winkel von 0° insbesondere unter Berücksichtigung einer maximalen Abweichung von kleiner als 8°, vorteilhaft von kleiner als 5° und besonders vorteilhaft von kleiner als 2° einschließt. Unter "zumindest im Wesentlichen senkrecht" soll hier insbesondere eine Ausrichtung einer Richtung relativ zu einer Bezugsrichtung, insbesondere in einer Ebene, verstanden werden, wobei die Richtung und die Bezugsrichtung einen Winkel von 90° insbesondere unter Berücksichtigung einer maximalen Abweichung von kleiner als 8°, vorteilhaft von kleiner als 5° und besonders vorteilhaft von kleiner als 2° einschließt.

Des Weiteren wird vorgeschlagen, dass die Türeinheit von der ersten Türposition in die zweite Türposition durch zumindest ein Verschwenken der Türeinheit um eine Schwenkachse, welche zumindest im Wesentlichen parallel zu deren Haupterstreckungsebene, insbesondere deren Haupterstreckungsrichtung und zwar vorzugsweise in der ersten Türposition der Türeinheit, orientiert ist, überführbar ist. Hierdurch kann eine ganz besonders flexible Raumteilung erzielt werden. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt.

Vorzugsweise ist denkbar, dass die Türeinheit insbesondere durch eine Kombination einer Verschiebung und einer Schwenkbewegung in die zweite Türposition überführbar ist. Insbesondere ist eine Verschwenkung von höchstens 30° vorzugsweise höchstens 25°, weiter bevorzugt höchstens 20° und ganz besonders bevorzugt höchstens 15° denkbar.

Es wird weiter vorgeschlagen, dass die Innenausbauvorrichtung zumindest eine Führungseinheit umfasst, welche zur Führung der Türeinheit vorgesehen ist, wobei die Führungseinheit zumindest ein erstes Führungselement und zumindest ein zweites Führungselement umfasst, welche zueinander parallel oder winklig zueinander angeordnet sind. Hierdurch kann auf konstruktiv vorteilhafte Art und Weise eine Verschiebung und/oder Verschwenkung der Türeinheit erzielt werden. Insbesondere sind die Haupterstreckungsrichtungen der Führungselemente zueinander parallel oder winklig angeordnet. Vorzugsweise weisen die Führungselemente zueinander eine Orientierung auf, welche von einer zumindest im Wesentlichen senkrechten Orientierung verschieden ist. Bevorzugt schließen die Führungselemente, insbesondere die Haupterstreckungsrichtungen der Führungselemente einen Winkel miteinander ein, welcher höchstens 30° vorzugsweise höchstens 25°, weiter bevorzugt höchstens 20° und ganz besonders bevorzugt höchstens 15° beträgt. Ferner ist die Führungseinheit, insbesondere die Führungselemente, zumindest teilweise an einer Innenausbaudecke, wie beispielsweise einem Baldachin, angeordnet und/oder in diese integriert. Alternativ oder zusätzlich könnten Führungselemente, insbesondere zusätzliche Führungselemente an einem Innenausbauboden angeordnet und/oder integriert sein. Die Führungselemente sind vorzugsweise als Führungsschienen ausgebildet. Die Führungseinheit ist insbesondere zumindest teilweise an der Türeinheit, insbesondere einer Innenausbaudecke zugewandten Oberseite der Türeinheit angeordnet. Ferner weist die Führungseinheit insbesondere zumindest zwei zu den jeweiligen ersten und zweiten Führungselementen korrespondierende Führungselemente auf. Die korrespondierenden Führungselemente sind an einer Oberseite der Türeinheit, welche der Innenausbaudecke zugewandt ist angeordnet und/oder integriert und zwar insbesondere an dem ersten Türelement. Die korrespondierenden Führungselemente sind zueinander in einer Richtung senkrecht zur Haupterstreckungsrichtung der Türeinheit voneinander beabstandet. Ferner sind die korrespondierenden Führungselemente insbesondere um eine Drehachse drehbar gelagert, welche parallel zur Haupterstreckungsrichtung der Türeinheit ist. Die korrespondierenden Führungselemente greifen insbesondere zur Führung der Türeinheit jeweils in eines der Führungselemente ein.

Erfindungsgemäß umfasst die Innenausbauvorrichtung zumindest eine Befestigungseinheit, welche zu einer von der Türposition abhängigen Kraft und/oder formschlüssigen Befestigung des zweiten Türelements an dem ersten Türelement vorgesehen ist. Hierdurch kann eine Sicherheit verbessert werden, da ein ungewolltes Bewegen der Türelemente zueinander in einer nicht dazu vorgesehenen Türposition vermieden werden kann. Weiter vorteilhaft kann eine Flexibilität verbessert werden, da bei einem Umbau zur Trennung von Raumbereichen eine Bewegung der ersten und zweiten Türelemente zueinander unberücksichtigt bleiben kann. Unter einer "kraft- und/oder formschlüssigen Befestigung" soll dabei insbesondere eine lösbare Befestigung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Die Befestigungseinheit ist insbesondere an einer Oberseite der Türeinheit, insbesondere den Türelementen angeordnet. Besonders bevorzugt weist die Befestigungseinheit zumindest ein erstes Befestigungselement, welches an dem ersten Türelement angeordnet ist und zumindest ein zu dem ersten Befestigungselement korrespondierend ausgebildetes zweites Befestigungselement, welches an dem zweiten Türelement angeordnet ist, auf. Bei einer Befestigung der Türelemente zueinander greifen das Befestigungselement und das weitere Befestigungselement ineinander ein. Besonders vorteilhaft bildet die Befestigungseinheit eine Rastverbindung aus. Vorzugsweise ist zumindest eines der Befestigungselemente als ein Rastelement und ein weiteres der Befestigungselemente, insbesondere das zweite Befestigungselement als ein korrespondierendes Rastelement ausgebildet. Vorzugsweise bildet das erste Befestigungselement einen Rasthaken aus während das zweite eine korrespondierende Rastaufnahme ausbildet. Ferner ist denkbar, dass die Befestigungseinheit weitere Befestigungsmechanismen nutzen kann wie beispielsweise einen Magnetmechanismus oder dergleichen.

Weiterhin wird vorgeschlagen, dass die Innenausbauvorrichtung zumindest eine Auslöseeinheit umfasst, welche zumindest, die zumindest ein Auslöseelement aufweist, welches dazu vorgesehen ist, eine Befestigung des zweiten Türelements mit dem ersten Türelement abhängig von einer Türposition der Türeinheit aufzuheben. Hierdurch kann insbesondere eine Flexibilität weiter verbessert werden. Besonders vorteilhaft kann eine automatische Auslösung der Befestigung erzielt werden, wodurch ein Umbau weiter vereinfacht werden kann. Die Auslöseeinheit ist insbesondere an einer Innenausbaudecke des Innenraumausbaus angeordnet und/oder integriert. Das Auslöseelement bildet insbesondere einen Anschlag für die Führungseinheit aus. Die Auslöseeinheit ist insbesondere zu einer mechanischen Auslösung der Befestigung vorgesehen.

Es wird ferner vorgeschlagen, dass das Auslöseelement mit zumindest einem Befestigungselement der Befestigungseinheit in der zweiten Türposition zu einer Aufhebung der Befestigung des ersten Türelements und des zweiten Türelements zusammenwirkt. Besonders bevorzugt weist Auslöseelement zumindest eine Anlaufschräge auf. Hierdurch kann ein besonders benutzerfreundlicher Mechanismus bereitgestellt werden. Die Anlaufschräge ist vorzugsweise in Richtung einer Bewegung, welche zur Überführung von der ersten Türposition in die zweite Türposition gerichtet. Bei einer Bewegung gegen die Türeinheit in die zweite Türposition wird das erste Befestigungselement von dem Auslöseelement, insbesondere durch Auflaufen dessen auf die Anlaufschräge abgelenkt und zumindest teilweise verformt, wodurch eine Verbindung zwischen dem ersten Befestigungselement und dem zweiten korrespondierenden Befestigungselement aufgehoben wird.

Es wird vorgeschlagen, dass die Innenausbauvorrichtung zumindest eine Fixiereinheit umfasst, welche dazu vorgesehen ist, die Türeinheit in zumindest einer Türposition, insbesondere der zweiten Türposition, zu fixieren. Hierdurch kann insbesondere eine Betriebssicherheit und/oder eine Stabilität der Vorrichtung verbessert werden. Die Fixiereinheit ist insbesondere zu einer Fixierung der Türeinheit an einem Innenausbauboden des Innenausbaus vorgesehen. Alternativ oder zusätzlich könnte die Fixiereinheit oder eine weitere Fixiereinheit zu einer Fixierung der Türeinheit an einer Innenausbaudecke vorgesehen sein. Die Fixiereinheit weist insbesondere zumindest ein Fixierelement auf, welches zu einer kraft- und/oder formschlüssigen Fixierung der Türeinheit vorgesehen ist. Vorzugsweise weist die Fixiereinheit ein korrespondierendes Fixierelement auf. Das korrespondierende Fixierelement ist insbesondere an einem Innenausbauboden und/oder ein an dem Innenausbauboden angeordneten Führung für die Türeinheit angeordnet. Beispielsweise ist das Fixierelement als ein Fixierpin ausgebildet. Ferner kann das korrespondierende Fixierelement als eine Fixierausnehmung ausgebildet sein. Ferner weist die Fixiereinheit zumindest einen Fixiermechanismus auf, welcher dazu vorgesehen ist, das Fixierelement unter Vorspannung zu halten. Die Fixierelement ist vorzugsweise zumindest teilweise insbesondere vorgespannt in dem ersten Türelement angeordnet.

Es wird vorgeschlagen, dass die Fixiereinheit dazu vorgesehen ist, bei einer Verschiebung des zweiten Türelements relativ zum ersten Türelement, auszulösen um die Türeinheit in der zweiten Türposition zu fixieren. Hierdurch kann insbesondere eine Betriebssicherheit und/oder eine Stabilität der Vorrichtung weiter verbessert werden. Insbesondere beaufschlagt das zweite Türelement bei dessen Bewegung zumindest ein Betätigungselement der Fixiereinheit, welches mit dem Fixierelement wirkverbunden ist. Vorzugsweise ist das Betätigungselement als ein Hebelarm ausgebildet. Insbesondere ist das Betätigungselement höchstens bei einer Bewegung des zweiten Türelements von dem ersten Türelement weg durch diese auslösbar. Bei einer Bewegung des zweiten Türelements relativ zur ersten Türelement ist das Betätigungselement dazu vorgesehen, von dem zweiten Türelement betätigt zu werden. Ferner ist das Betätigungselement dazu vorgesehen, den Fixiermechanismus bei einer Betätigung auszulösen, wodurch das Fixierelement in eine Fixierstellung überführbar ist. Vorzugsweise ist ein Lösen der Fixiereinheit und einer Überführung der Türeinheit von der zweiten Türposition in die erste Position höchstens händisch möglich.

Es wird vorgeschlagen, dass die Innenausbauvorrichtung zumindest ein weiteres Türelement umfasst, welches separat von der Türeinheit ausgebildet ist. Hierdurch kann insbesondere eine Flexibilität weiter verbessert werden. Vorzugsweise ist das weitere Türelement zumindest teilweise verschiebbar und/oder verschwenkbar. Insbesondere weist die Innenausbauvorrichtung für das weitere Türelement zumindest eine weitere Führungseinheit auf. Die weitere Führungseinheit ist vorzugsweise von der Führungseinheit separat ausgebildet. Insbesondere umfasst die weitere Führungseinheit zumindest ein weiteres Führungselement dessen Haupterstreckungsrichtung winklig zu zumindest einer Haupterstreckungsrichtung zumindest einer der Führungselemente der Führungseinheit orientiert ist. Das weitere Türelement weist insbesondere zumindest zwei Türstellungen auf. Insbesondere in einer ersten Türelementstellung des weiteren Türelements ist das weitere Türelement an der Innenausbauwand, vorzugsweise zwischen Türeinheit und Innenausbauwand, und zwar vorzugsweise dem zweiten Türelement der Türeinheit und der Innenausbauwand angeordnet. In einer zweiten Türstellung ist das weitere Türelement zwischen der Innenausbauwand quer zwischen der Innenausbauwand und der Türeinheit, insbesondere dem zweiten Türelement der Türeinheit, angeordnet.

Es wird vorgeschlagen, dass das weitere Türelement in der ersten Türposition der Türeinheit zumindest teilweise von der Türeinheit verdeckt angeordnet ist. Hierdurch kann insbesondere ein Bauraum verringert werden, da das weitere Türelement vorteilhaft verstaut werden kann. Die erste Türstellung des weiteren Türelements tritt insbesondere zumindest dann auf, wenn sich die Türeinheit in der ersten Türposition befindet. Für diesen Fall ist das weitere Türelement insbesondere zwischen der Innenausbauwand und der Türeinheit angeordnet und somit beidseitig verdeckt.

Um insbesondere einen Benutzerkomfort weiter zur erhöhen wird vorteilhaft vorgeschlagen, dass das weitere Türelement in der zweiten Türposition der Türeinheit von der Türeinheit frei gegeben ist. Die zweite Türstellung des weiteren Türelements tritt insbesondere zumindest dann auf, wenn sich die Türeinheit in der zweiten Türposition befindet. Für diesen Fall ist das weitere Türelement von der Türeinheit freigegeben, so dass dieses quer insbesondere zwischen der Innenausbauwand und der Türeinheit angeordnet und somit beidseitig verdeckt ist. Besonders bevorzugt ist das weitere Türelement zumindest in der zweiten Türposition zumindest teilweise zur Trennung des ersten Raumbereichs von dem zweiten Raumbereich vorgesehen.

Es wird ein Verfahren zur wahlweise zumindest teilweisen Trennung eines ersten Raumbereichs und eines zweiten Raumbereichs eines Wohnfahrzeugs gemäß Anspruch 15 vorgeschlagen.

### Zeichnungen

Weitere Vorteile ergeben sich aus der folgenden Zeichnungsbeschreibung. In den Zeichnungen ist ein Ausführungsbeispiel der Erfindung dargestellt.

Es zeigen:
- Fig. 1: Wohnfahrzeug mit einer Innenausbauvorrichtung,
- Fig. 2: verschiedene Anordnungen eines Teils der Innenausbauvorrichtung mit einer Türeinheit zu einer zumindest teilweisen Trennung von Raumbereichen in verschiedenen Ausrichtungen,
- Fig. 3: einen Teil der Innenausbauvorrichtung mit der Türeinheit, in einer Draufsicht,
- Fig. 4: einen Teil der Innenausbauvorrichtung mit der Türeinheit, einer Befestigungseinheit und einer Auslöseeinheit in einer perspektivischen Ansicht,
- Fig. 5: einen Teil der Innenausbauvorrichtung mit der Türeinheit und einer Fixiereinheit in einer perspektivischen Seitenansicht,
- Fig. 6: einen schematischen Ablaufplan eines beispielhaften Verfahrens zum Betrieb der Innenausbauvorrichtung,
- Fig. 7: einen Teil der Innenausbauvorrichtung mit einer Funktionseinheit und einer Versorgungseinheit in einer perspektivischen Ansicht,
- Fig. 8: einen Teil der Innenausbauvorrichtung in verschiedenen Positionen der Türeinheit in einer perspektivischen Ansicht und
- Fig. 9: einen schematischen Ablaufplan eines beispielhaften Verfahrens zum Betrieb der Innenausbauvorrichtung.

### Beschreibung des Ausführungsbeispiels

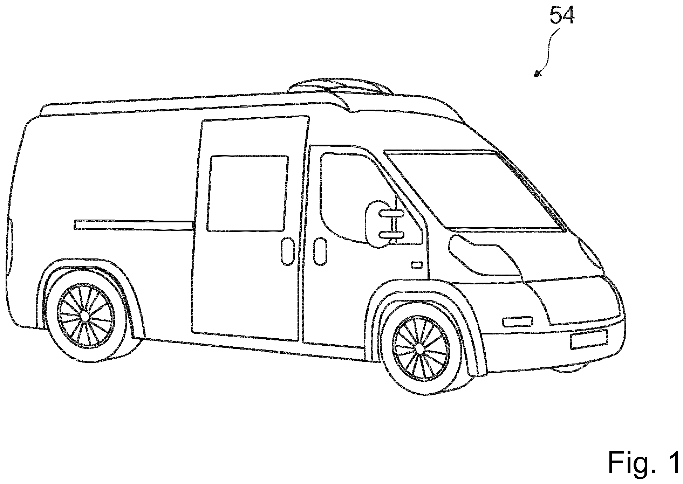

Die Fig. 1 zeigt ein Wohnfahrzeug 54 mit einer Innenausbauvorrichtung. Die Innenausbauvorrichtung bildet im vorliegenden Fall einen Innenausbau 92 des Wohnfahrzeugs 54 vollständig aus.

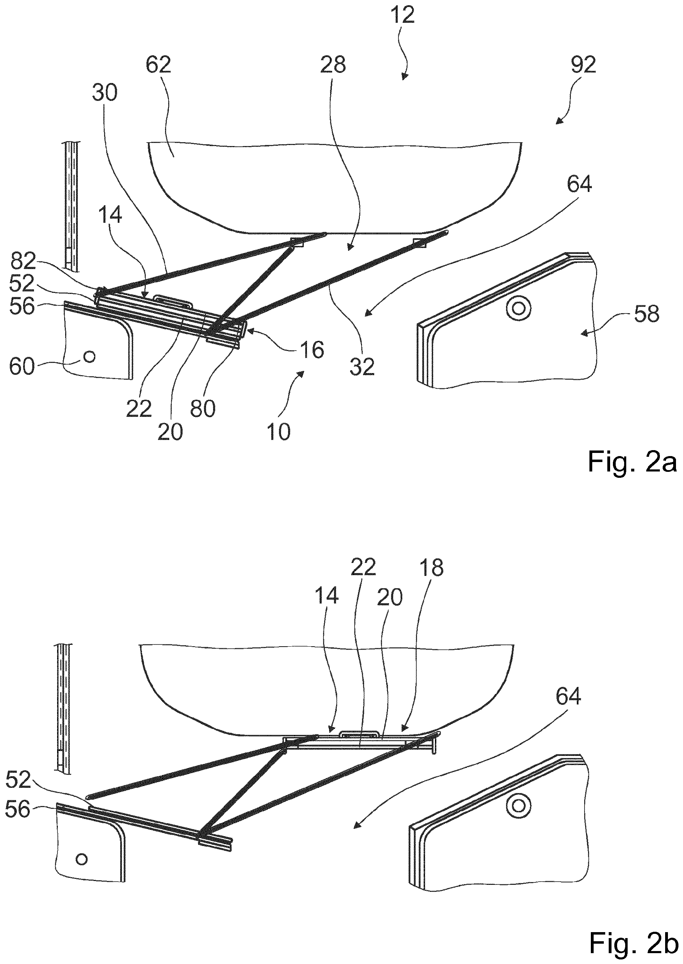

Die Figuren 2a-2d zeigen die Innenausbauvorrichtung in einer schematischen Draufsicht in verschiedenen Ausrichtungen.

Der Innenausbau 92 umfasst dabei zumindest zwei separat voneinander ausgebildete Raumbereiche 10, 12. Die Raumbereiche 10, 12 sind durch einen Durchgang 64 miteinander verbunden. Die Innenausbauvorrichtung weist zumindest eine Innenausbauwand 56 auf. Die Innenausbauwand 56 begrenzt den Durchgang 64.

Ein erster Raumbereich 10 der zwei Raumbereiche 10, 12 ist im vorliegenden Fall als ein Sanitärbereich ausgebildet. Der erste Raumbereich 10 umfasst im vorliegenden Fall zumindest eine Dusche 58. Ferner weist der erste Raumbereich 10 zumindest ein Waschbecken 60 auf. Die Dusche 58 und das Waschbecken 60 sind aneinander gegenüberliegend angeordnet. Die Dusche 58 und das Waschbecken 60 sind an gegenüberliegenden Seiten des ersten Raumbereichs 10 angeordnet.

Ein zweiter Raumbereich 12 der zwei Raumbereiche 10, 12 ist im vorliegenden Fall als ein Schlafbereich ausgebildet. Der zweite Raumbereich 12 umfasst zumindest ein Bett 62. Im vorliegenden Fall ist das Bett 62 zentral innerhalb des zweiten Raumbereichs 12 angeordnet. Das Bett 62 nimmt einen Großteil einer Grundfläche des zweiten Raumbereichs 12 ein.

Es sind ferner weitere Kombinationen und Ausgestaltungen von Raumbereichen denkbar. Insbesondere könnten weitere Raumbereiche vorhanden sein und/oder die Raumbereiche verschieden ausgestaltet sein, wie beispielsweise als Sanitärbereich, ein Schlafbereich, ein Wohnbereich, ein Küchenbereich und/oder ein Essbereich oder dergleichen.

Zur wahlweise zumindest teilweisen Trennung des ersten Raumbereichs 10 und des zweiten Raumbereichs 12 weist die Innenausbauvorrichtung zumindest eine bewegbare Türeinheit 14 auf. Die Türeinheit 14 ist bewegbar. Durch Bewegung der Türeinheit 14 ist diese in zumindest in zwei Türpositionen 16, 18 überführbar. In einer ersten Türposition 16 der Türpositionen 16, 18 ist die Türeinheit 14 in einem Nahbereich der Innenausbauwand 56 angeordnet (vgl. Figur 2a). In der ersten Türposition 16 ist die Türeinheit 14 außerhalb des Durchgangs 64 angeordnet. In einer zweiten Türposition 18 der Türpositionen 16, 18 ist die Türeinheit 14 außerhalb des Nahbereichs der Innenausbauwand 56 angeordnet. In der zweiten Türposition 18 ist die Türeinheit 14 in dem Durchgang 56 angeordnet (vgl. Figuren 2b-2d). Demnach trennt die Türeinheit 14 in der zweiten Türposition 18 zumindest teilweise den ersten Raumbereich 10 und den zweiten Raumbereich 12 voneinander ab.

Ferner ist denkbar, dass die Innenausbauvorrichtung eine von der hier gezeigten Anzahl, abweichende Anzahl an Türeinheiten aufweisen kann. Beispielsweise weist die Innenausbauvorrichtung je abzutrennenden Raumbereich bzw. Durchgang zumindest eine Türeinheit auf. Ferner ist denkbar, dass mehrere Unreinheiten gemeinsam zu einer Trennung von Raumbereichen vorgesehen sein könnten.

Die Türeinheit 14 ist von der ersten Türposition 16 in die zweite Türposition 18 durch zumindest eine Verschiebung der Türeinheit 14 in einer Richtung quer zu deren Haupterstreckungsebene überführbar. Ferner ist die Türeinheit 14 von der ersten Türposition 16 in die zweite Türposition 18 durch zumindest ein Verschwenken der Türeinheit 14 um eine Schwenkachse, welche zumindest im Wesentlichen parallel zu deren Haupterstreckungsebene orientiert ist, überführbar. Im vorliegenden Fall wird die Türeinheit 14 gleichzeitig zumindest quer zu deren Haupterstreckungsebene verschoben und um die Schwenkachse verschwenkt.

Zur Führung der Türeinheit 14 weist die Innenausbauvorrichtung zumindest eine Führungseinheit 28 auf. Die Führungseinheit 28 ist zumindest teilweise an einer Innenausbaudecke (nicht dargestellt) der Innenausbauvorrichtung, eines Türrahmens oder einem Baldachin der Innenausbauvorrichtung angeordnet. Ferner ist die Führungseinheit 28 zumindest teilweise an einer Oberseite der Türeinheit 14, welche der Innenausbaudecke zugewandt ist, angeordnet.

Die Führungseinheit 28 weist zumindest ein erstes Führungselement 30 auf. Das erste Führungselement 30 ist an der Innenausbaudecke angeordnet und/oder in diese integriert. Das erste Führungselement 30 ist als eine Führungsschiene ausgebildet. Ferner weist die Führungseinheit 28 zumindest ein zweites Führungselement 32 auf. Das zweite Führungselement 32 ist an der Innenausbaudecke angeordnet und/oder in diese integriert. Das erste Führungselement 30 ist als eine Führungsschiene ausgebildet. Das zweite Führungselement 32 ist zumindest im Wesentlichen identisch zum ersten Führungselement 30 ausgebildet. Das erste Führungselement 30 und das zweite Führungselement 32 sind zueinander versetzt angeordnet. Das erste Führungselement 30 und das zweite Führungselement 32 sind im vorliegenden Fall zueinander winklig angeordnet. Genauer gesagt ist eine Haupterstreckungsrichtung des ersten Führungselements 30 winklig zu einer Haupterstreckungsrichtung des zweiten Führungselements 32 orientiert. Die Führungselemente 30, 32 schließen einen Winkel von höchstens 10° zueinander ein. Alternativ ist denkbar, dass die Führungselemente bzw. deren Haupterstreckungsrichtungen zueinander parallel angeordnet sind. Die Führungselemente 30, 32 bzw. deren Haupterstreckungsrichtungen weisen jedoch stets eine Orientierung auf, welche von einer senkrechten Orientierung verschieden ist.

Die Führungseinheit 28 weist zumindest ein zum dem ersten Führungselement 30 korrespondierend ausgebildetes erstes korrespondierendes Führungselement 80 auf. Das erste korrespondierende Führungselement 80 ist an der Oberseite der Türeinheit 14 angeordnet. Das erste Führungselement 30 und das erste korrespondierende Führungselement 80 greifen ineinander ein. Das erste korrespondierende Führungselement 80 ist um eine Drehachse, welche zumindest im Wesentlichen parallel zu einer Haupterstreckungsrichtung der Türeinheit 14 ist, frei drehbar. Das erste korrespondierende Führungselement 80 ist als eine Führungsrollenaufhängung ausgebildet.

Die Führungseinheit 28 weist ferner zumindest ein zum dem zweiten Führungselement 30 korrespondierend ausgebildetes zweites korrespondierendes Führungselement 82 auf. Das zweite korrespondierende Führungselement 82 ist an der Oberseite der Türeinheit 14 angeordnet. Das zweite korrespondierende Führungselement 82 ist versetzt zu dem ersten korrespondierenden Führungselement 80 angeordnet und zwar in einer Richtung senkrecht zu einer Haupterstreckungsrichtung der Türeinheit 14. Das zweite korrespondierende Führungselement 82 ist zumindest im Wesentlichen identisch zum ersten korrespondierenden Führungselement 80 ausgebildet.

Durch die winklige Anordnung der Führungselemente 30, 32, sowie die drehbare Ausgestaltung der korrespondierenden Führungselemente 80, 82 erlaubt die Führungseinheit 28 bei einer Bewegung der Türeinheit 14, beispielsweise bei einer Überführung von der ersten Türposition 16 in die zweite Türposition 18, dass sich diese gleichzeitig verschieben und verschwenken lässt.

Alternativ oder zusätzlich könnte eine Führungseinheit insbesondere eine weitere Führungseinheit zumindest teilweise an einem Innenausbauboden der Innenausbauvorrichtung und/oder an einer Unterseite der Türeinheit, welche dem Innenausbauboden zugewandt ist, angeordnet sein.

Die Türeinheit 14 weist zumindest zwei Türelemente 20, 22 auf und zwar ein erstes Türelement 20 und ein zweites Türelement 22. Das erste Türelement 20 und das zweite Türelement 22 sind als Türblätter ausgebildet. Die Türelemente 20, 22 sind zumindest teilweise aus Holz ausgebildet. Ferner ist denkbar, dass diese weiter zumindest teilweise aus einem Blech, einem Kunststoff, aus Glas, aus Papier, aus Pappe und/oder aus einem Textilmaterial ausgebildet sind. Alternativ könnten die Türelemente aus verschiedenen Materialen ausgebildet sein. Beispielsweise könnte das erste Türelement 20, insbesondere zur Verbesserung einer Stabilität aus Holz ausgebildet sein, während das zweite Türelement 22 aus Blech ausgebildet ist.

Das erste Türelement 20 weist eine Innenseite 72 auf. Ferner weist das erste Türelement 20 eine Außenseite 74 auf. Die Innenseite 72 ist dem ersten Raumbereich 10 zugewandt. Die Außenseite 74 ist dem zweiten Raumbereich 10 zugewandt. Das zweite Türelement 22 weist eine Innenseite 76 auf. Ferner weist das zweite Türelement 22 eine Außenseite 78 auf. Die Innenseite 76 des zweiten Türelements 22 ist dem zweiten Raumbereich 12 zugewandt. Ferner ist die Innenseite 76 des zweiten Türelements 22 der Innenseite 72 des ersten Türelements 20 zugewandt. Die Außenseite 78 des zweiten Türelements 22 ist dem ersten Raumbereich 10 zugewandt.

Die Führungseinheit 28 ist im vorliegenden Fall an dem ersten Türelement 20 angeordnet. Das erste korrespondierende Führungselement 80 und das zweite korrespondierende Führungselement 82 sind zueinander versetzt an einer Oberseite des ersten Türelements 20, welche der Innenausbaudecke zugewandt ist, angeordnet. Alternativ oder zusätzlich könnte die Führungseinheit an dem zweiten Türelement angeordnet.

Das zweite Türelement 22 ist zumindest mittelbar mit dem ersten Türelement 20 gekoppelt. Das zur zumindest mittelbaren Koppelung der Türelemente 20, 22 weist die Türeinheit 14 zumindest eine Koppeleinheit 66 auf. Die Koppeleinheit 66 ist zwischen den Türelementen 20, 22 angeordnet. Die Koppeleinheit 66 ist im vorliegenden Fall als ein Teleskopauszug ausgebildet. Die Koppeleinheit 66 weist zumindest ein erstes Koppelelement 68 und zumindest ein zu dem ersten Koppelelement 68 korrespondierend ausgebildetes zweites Koppelelement 70 auf. Das erste Koppelelement 68 ist an dem ersten Türelement 20 angeordnet. Das erste Koppelelement 68 ist an der Innenseite 72 des ersten Türelements 20 angeordnet. Das zweite Koppelelement 70 ist an dem zweiten Türelement 22 angeordnet. Das zweite Koppelelement 70 ist an einer Innenseite 76 des zweiten Türelements 22 angeordnet. Die Koppelelemente 68, 70 greifen ineinander ein. Die Koppelelemente 68, 70 sind zu einer gegenseitigen Führung der Türelemente 20, 22 insbesondere zu einer Linearführung dieser vorgesehen. Die Koppelelemente 68, 70 sind als Auszugsschienen, vorzugsweise Teleskopauszugsschienen, ausgebildet.

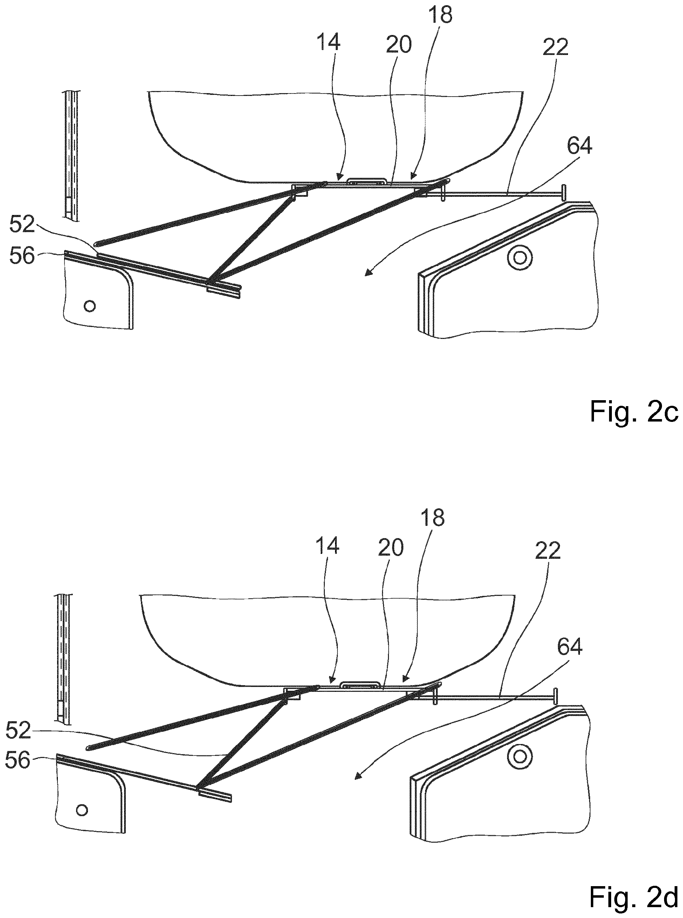

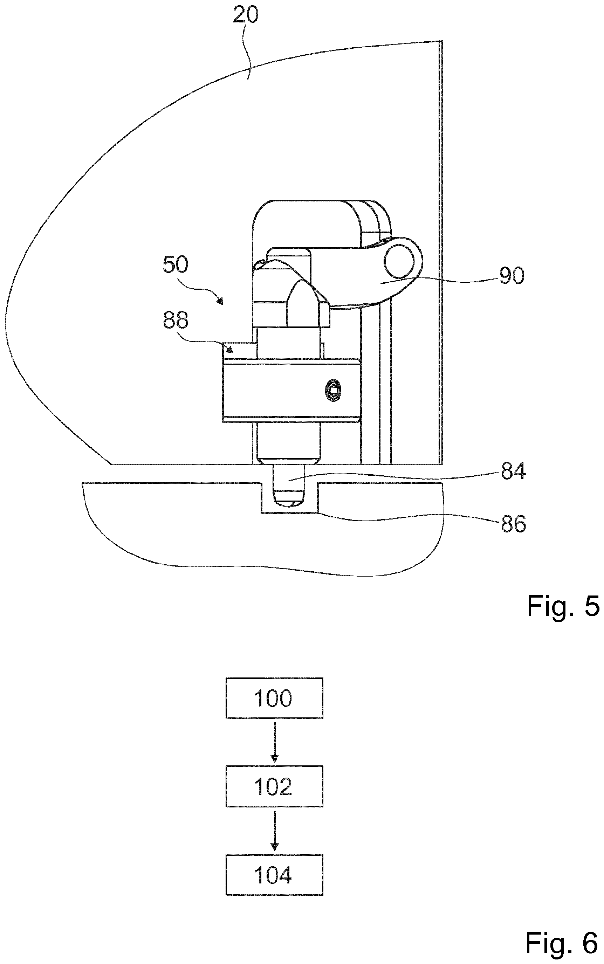

Die Innenausbauvorrichtung weist zumindest eine Fixiereinheit 50 auf, welche dazu vorgesehen ist, die Türeinheit 14 in zumindest einer Türposition 16, 18 zu fixieren (vgl. Figur 5). Im vorliegenden Fall fixiert die Fixiereinheit 50 die Türeinheit 14 in der zweiten Türposition 16 (vgl. Figuren 2c und 2d). Die Fixiereinheit 50 ist zu einer Fixierung der Türeinheit 14 an einem Innenausbauboden der Innenausbauvorrichtung vorgesehen. Die Fixiereinheit 50 weist zumindest ein Fixierelement 84 auf. Im vorliegenden Fall ist die Fixiereinheit 50 zumindest teilweise im ersten Türelement 20 angeordnet. Das Fixierelement 84 ist an dem ersten Türelement 20 angeordnet. Alternativ oder zusätzlich könnte die Fixiereinheit oder eine weitere Fixiereinheit zu einer Fixierung der Türeinheit an einer Innenausbaudecke vorgesehen sein.

Das Fixierelement 84 ist zu einer kraft- und/oder formschlüssigen Fixierung der Türeinheit 14 vorgesehen. Ferner weist die Fixiereinheit 50 ein korrespondierendes Fixierelement 86 auf. Das korrespondierende Fixierelement 86 ist an einem Innenausbauboden und/oder einer an dem Innenausbauboden angeordneten Führung für die Türeinheit 14 angeordnet. Beispielsweise ist das Fixierelement 84 als ein Fixierpin ausgebildet. Ferner kann das korrespondierende Fixierelement 86 als eine Fixierausnehmung ausgebildet sein.

Ferner weist die Fixiereinheit 50 zumindest einen Fixiermechanismus 88 auf. Der Fixiermechanismus 88 ist dazu vorgesehen, das Fixierelement 86 unter Vorspannung zu halten. Derart ist das Fixierelement 84 ist zumindest teilweise insbesondere vorgespannt in dem ersten Türelement 20 angeordnet.

Die Fixiereinheit 50 ist bei einer Verschiebung des zweiten Türelements 22 relativ zum ersten Türelement 20, auszulösen um die Türeinheit 14 in der zweiten Türposition 18 zu fixieren. Das zweite Türelement 22 beaufschlagt dessen Bewegung mit zumindest einem Betätigungselement 90 der Fixiereinheit 50, welches mit dem Fixierelement 84 wirkverbunden ist. Das Betätigungselement 90 ist im vorliegenden Fall als ein Hebelarm ausgebildet. Bei einer Bewegung des zweiten Türelements 22 relativ zum ersten Türelement 20 ist das Betätigungselement 90 dazu vorgesehen, von dem zweiten Türelement 22 betätigt zu werden. Ferner ist das Betätigungselement 90 dazu vorgesehen, den Fixiermechanismus 88 bei einer Betätigung auszulösen, woraufhin das Fixierelement 84 in eine Fixierstellung überführbar ist. Ein Lösen der Fixiereinheit 50 zu einer Überführung der Türeinheit 14 von der zweiten Türposition 18 in die erste Türposition 16 ist höchstens händisch möglich.

Die Türeinheit 14 bildet eine Schiebetür aus. Das zweite Türelement 22 ist relativ zu dem ersten Türelement 20 verschiebbar. Demnach weist die Türeinheit 14 zwei Türstellungen auf. Eine erste Türstellung in, welcher das erste Türelement 20 und das zweite Türelement 22 hintereinander angeordnet sind und eine zweite Türstellung, in welcher das zweite Türelement 22 relativ zum ersten Türelement 20 verschoben ist. Dabei ist eine Bewegbarkeit der Türelemente 20, 22 zueinander jedoch abhängig von der Türposition 16, 18 der Türeinheit 14. Im vorliegenden Fall ist in der ersten Türposition 16 das zweite Türelement 22 relativ zum ersten Türelement 20 unbeweglich befestigt. In der zweiten Türposition 18 hingegen ist das zweite Türelement 22 relativ zum ersten Türelement 20 bewegbar.

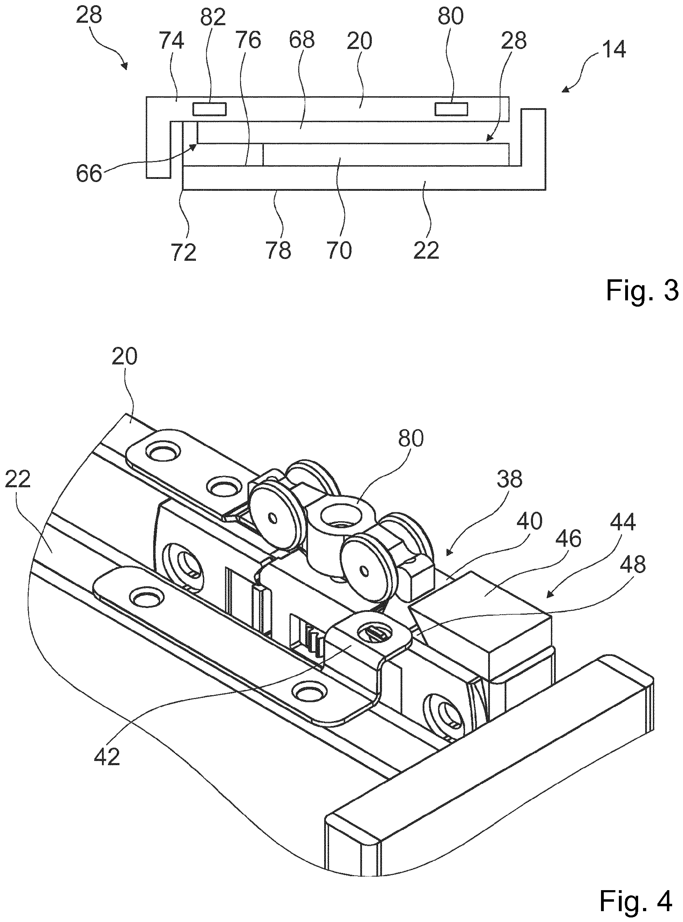

Zu einer türpositionsabhängigen Befestigung weist die Innenausbauvorrichtung nach zumindest eine Befestigungseinheit 38 auf (vgl. Figur 4). Die Befestigungseinheit 38 ist dazu vorgesehen, das zweite Türelement 22 abhängig von der Türposition 16, 18 der Türeinheit 14 an dem ersten Türelement 20 unbeweglich zu befestigen. Die Befestigungseinheit 38 ist zumindest teilweise an einer Oberseite der Türeinheit 14 angeordnet.

Die Befestigungseinheit 38 weist zumindest ein erstes Befestigungselement 40 auf. Das erste Befestigungselement 40 ist an dem ersten Türelement 20 angeordnet. Das Befestigungselement 40 ist an der Oberseite des ersten Türelements 20 angeordnet. Ferner weist die Befestigungseinheit 38 und zumindest ein zu dem ersten Befestigungselement 40 korrespondierend ausgebildetes zweites Befestigungselement 42 auf. Das zweite Befestigungselement 42 ist an dem zweiten Türelement 22 angeordnet. Das zweite Befestigungselement 42 ist an einer Oberseite des zweiten Türelements 22 angeordnet. Das erste Befestigungselement 40 ist als ein Rastelement, insbesondere in Form eines Rasthakens, ausgebildet. Das zweite Befestigungselement 42 ist als eine Rastaufnahme ausgebildet. Das erste Befestigungselement 40 rastet von unten her in das zweite Befestigungselement 42 ein. Dabei bildet die Befestigungseinheit 38 eine Rastverbindung des ersten Türelements 20 mit dem zweiten Türelement 22 aus.

Um eine Befestigung des zweiten Türelements 22 mit dem ersten Türelement 20 aufzuheben weist die Innenausbauvorrichtung zumindest eine Auslöseeinheit 44 auf. Die Auslöseeinheit 44 ist zumindest teilweise an einer Innenausbaudecke angeordnet. Die Auslöseeinheit 44 weist zumindest ein Auslöseelement 46 auf. Das Auslöseelement 46 bildet einen Anschlag für die Türeinheit 14 in der zweiten Türposition 18 aus. Das Auslöseelement 46 weist zumindest eine Anlaufschräge 48 auf. Das Auslöseelement 46 wirkt mit dem ersten Befestigungselement 40 der Befestigungseinheit 38 in der zweiten Türposition 18 zusammen um eine Aufhebung der Befestigung des ersten Türelements 29 und des zweiten Türelements 22 zu erzielen. Dabei läuft bei der Bewegung der Türeinheit 14 in die zweite Türposition 18 das erste Befestigungselement 40 auf die Auslöseeinheit 46 auf. Das erste Befestigungselement 40 wird durch das Auslöseelement 46, insbesondere die Anlaufschräge, verformt, wodurch eine Verbindung des ersten Befestigungselements 40 und des zweiten Befestigungselements 42 aufgehoben wird.

Die Innenausbauvorrichtung weist ferner zumindest ein weiteres Türelement 52 auf. Das weitere Türelement 52 ist zumindest im Wesentlichen identisch zu dem ersten und/oder zweiten Türelement 22 der Türeinheit 14 ausgebildet. Im vorliegenden Fall ist das weitere Türelement 52 von der Türeinheit 14 separat ausgebildet.

Das weitere Türelement 52 weist zumindest zwei Türstellungen auf. In der ersten Türstellung ist dieses an der Innenausbauwand 56 angeordnet. In der zweiten Türstellung trennt dieses zumindest teilweise den ersten Raumbereich 10 und den zweiten Raumbereich 12 voneinander ab. In der ersten Türstellung ist das weitere Türelement 52, wenn sich die Türeinheit 14 in der ersten Türposition 16 befindet zumindest teilweise von dieser verdeckt angeordnet. Das weitere Türelement 52 ist freigegeben, wenn sich die Türeinheit 14 in der zweiten Türposition 18 befindet. Insbesondere wenn sich die Türeinheit 14 in der zweiten Türposition 18 befindet und die Türeinheit 14 ihre zweite Türstellung aufweist und das weitere Türelement 52 dessen zweite Türstellung einnimmt, trennen die Türeinheit 14, insbesondere das erste Türelement 20, das zweite Türelement 22, und das weitere Türelement 52 den ersten Raumbereich 10 vollständig von dem zweiten Raumbereich 12 ab.

Dazu ist das weitere Türelement 52 zumindest teilweise in einer Richtung quer zu dessen Haupterstreckungsebene bewegbar. Ferner ist das weitere Türelement 52 von der ersten Türstellung in die zweite Türstellung durch zumindest ein Verschwenken des weiteren Türelements 52 um eine Schwenkachse, welches zumindest im Wesentlichen parallel zu deren Haupterstreckungsebene orientiert ist, überführbar. Im vorliegenden Fall wird das weitere Türelement 52 gleichzeitig zumindest quer zu deren Haupterstreckungsebene verschoben und um die Schwenkachse verschwenkt.

Alternativ oder zusätzlich ist denkbar, dass eine Türeinheit ein weiteres Türelement als ein drittes Türelement umfassen kann. Beispielsweise könnte dann das weitere Türelement relativ zum ersten und/oder zweiten Türelement verschwenkbar sein, um eine Trennung der Raumbereiche durchzuführen. Ferner könnte das weitere Türelement zwischen dem ersten Türelement und dem zweiten Türelement angeordnet sein und derart lediglich freigegeben werden, wenn auch eine Bewegung des zweiten Türelements zu dem ersten Türelement freigegeben wird.

In Figur 6 ist ein schematischer Ablaufplan eines beispielhaften Verfahrens zur wahlweise zumindest teilweisen Trennung des ersten Raumbereichs 10 und des zweiten Raumbereichs 12 mit zumindest der Innenausbauvorrichtung gezeigt.

Das Verfahren umfasst einen ersten Verfahrensschritt 100. In dem ersten Verfahrensschritt 100 befindet sich die Türeinheit 14 zunächst in der ersten Türposition 16 (vgl. Figur 2a). Ferner weist die Türeinheit 14 die erste Türstellung auf. Das weitere Türelement 52 weist die erste Türstellung auf. In dem Verfahrensschritt 100 wird die Türeinheit von der ersten Türposition 16 in die zweite Türposition 18 bewegt (vgl. Figur 2b). Im vorliegenden Fall wird die Türeinheit 14 insbesondere entlang der Führungseinheit 28 verschoben. Ferner wird die Türeinheit 14 insbesondre entlang der Führungseinheit 28 verschwenkt. Durch Überführung in die zweite Türposition 18 werden die miteinander befestigten Türelemente 20, 22 der Türeinheit 14 voneinander gelöst und zueinander bewegbar.

Das Verfahren umfasst zumindest einen weiteren Verfahrensschritt 102. In dem weiteren Verfahrensschritt 102 wird die Türeinheit 14 von der ersten Türstellung in die zweite Türstellung überführt (vgl. Figur 2c). Dazu wird das zweite Türelement 22 relativ zum ersten Türelement 20 bewegt. Durch die Bewegung der Türelemente 20, 22 zueinander wird die Fixiereinheit 50 ausgelöst, wodurch die Türeinheit 14 fest in der zweiten Türposition 18 fixiert wird.

Das Verfahren umfasst zumindest einen weiteren Verfahrensschritt 104. In dem weiteren Verfahrensschritt 104 wird das weitere Türelement 52 von dessen erster Türstellung in dessen zweite Türstellung überführt (vgl. Figur 2d).

Insbesondere um die Raumbereiche 10, 12 wiederum miteinander zu verbinden können, müssen die oben genannten Verfahrensschritte in einer umgekehrten Reihenfolge durchgeführt werden. Dabei muss jedoch zumindest die Fixiereinheit 50 von Hand gelöst werden.

Hinsichtlich weiterer Verfahrensschritte des Verfahrens zu einem Betrieb der Vorrichtung darf auf die vorhergehende Beschreibung der Vorrichtung verwiesen werden, da diese Beschreibung analog auch auf das Verfahren zu lesen ist und somit alle Merkmale hinsichtlich der Vorrichtung auch in Bezug auf das Verfahren zu einem Betrieb der Vorrichtung als offenbart gelten.

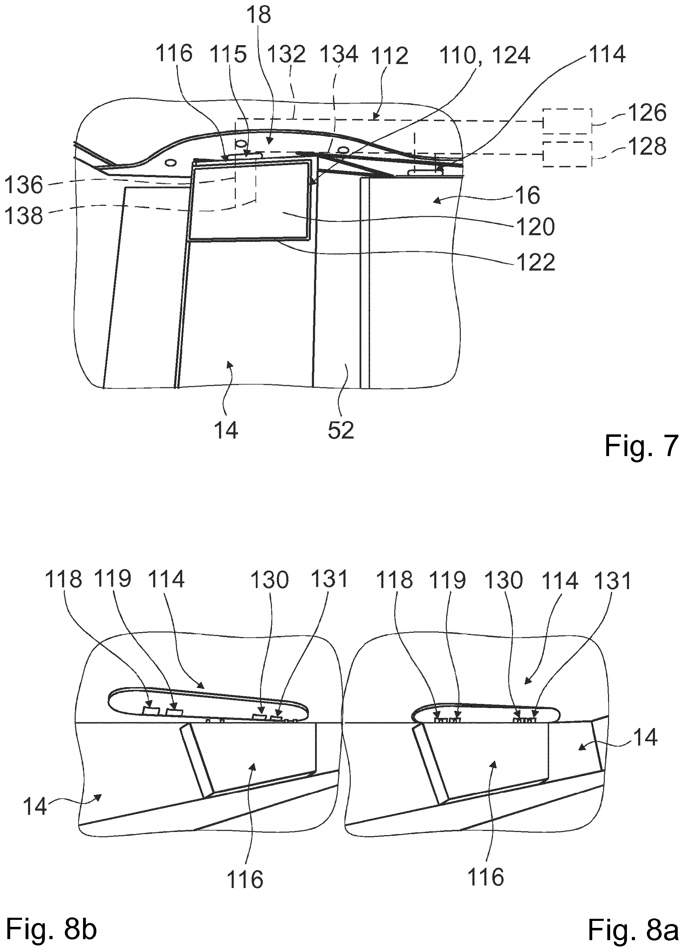

Figur 7 zeigt die Innenausbauvorrichtung mit einer Funktionseinheit 110 und einer Versorgungseinheit 112 für die Funktionseinheit 110 in einer perspektivischen Ansicht.

Die Innenausbauvorrichtung umfasst zumindest eine elektrisch und/oder elektronisch betreibbare Funktionseinheit 110 auf. Die Funktionseinheit 110 ist an der Türeinheit 14 angeordnet. Im vorliegenden Fall ist die Funktionseinheit 110 an dem ersten Türelement 20 der Türeinheit 14 angeordnet. Alternativ könnte eine Funktionseinheit auch an dem zweiten Türelement der Türeinheit angeordnet sein. Ferner ist denkbar, dass die Funktionseinheit in die Tateinheit integriert sein könnte.

Die Funktionseinheit 110 weist zumindest eine Anzeigeeinheit 120 auf. Ferner weist die Funktionseinheit 110 zumindest einen Lautsprecher 122 auf. Im vorliegenden Fall bildet die Funktionseinheit 110 einen Fernseher 124 aus. Alternativ könnte die Funktionseinheit auch nur die Anzeigeeinheit umfassen und somit lediglich einen Monitor ausbilden. Auch ist denkbar, dass die Funktionseinheit lediglich eine Beleuchtungseinheit, wie beispielsweise eine LED oder dergleichen umfasst, welche zu einer von der Türposition abhängigen Beleuchtung der Raumbereiche vorgesehen sein könnten.

Die Funktionseinheit 110 ist zumindest mit einem elektrischen Signal versorgbar. Das elektrische Signal ist zu einer Energieversorgung der Funktionseinheit 110 vorgesehen. Beispielsweise stellt das elektrische Signal eine Strom- und/oder Spannungsversorgung sicher. Ferner ist die Funktionseinheit 110 mit einem elektronischen Signal betreibbar. Das elektronische Signal ist zu einer Datenversorgung der Funktionseinheit 110 vorgesehen. Beispielsweise stellt das elektronische Signal eine Datenversorgung sicher, wie beispielsweise ein Fernsehsignal. Bei dem elektronischen Signal kann es sich dabei insbesondere um ein analoges oder ein digitales Signal handeln.

Ferner weist die Innenausbauvorrichtung zumindest eine Versorgungseinheit 112 auf. Die Versorgungseinheit 112 ist dazu vorgesehen, die Funktionseinheit 110 zumindest abhängig von einer Türposition 16, 18 der Türeinheit 14 mit einem elektrischen und/oder elektronischen Signal zu versorgen. Die Versorgungseinheit 112 versorgt die Funktionseinheit 10 in der zweiten Türposition 18 der Türeinheit 14 mit dem elektrischen und/oder elektronischen Signal. Zusätzlich kann die Versorgungseinheit 112 die Funktionseinheit 110 auch in der ersten Türposition 16 der Türeinheit 14 versorgen.

Die Versorgungseinheit 112 umfasst zumindest eine Steuereinheit 126. Die Steuereinheit 126 stellt zumindest das elektronische Signal zur Verfügung. Im vorliegenden Fall ist die Steuereinheit 126 als ein Fernsehreceiver ausgebildet. Ferner weist die Versorgungseinheit 112 zumindest eine Energieversorgung 128 auf. Die Energieversorgung 128 stellt das elektronische Signal zur Verfügung. Im vorliegenden Fall ist die Energieversorgung 128 von einem Netzstecker gebildet, welcher insbesondere mit einem Bordnetz des Wohnfahrzeugs verbunden ist.

Die Versorgungseinheit 112 ist zumindest teilweise in die Türeinheit 14 integriert. Alternativ könnte die Versorgungseinheit teilweise in die Funktionseinheit integriert sein. Die Versorgungseinheit 112 ist teilweise separat von der Türeinheit 14 ausgebildet. Im vorliegenden Fall ist die Versorgungseinheit 112 teilweise an der Innenausbaudecke angeordnet und/oder in eine Innenausbaudecke integriert. Alternativ könnte die Versorgungseinheit auch teilweise in einem Innenausbauboden, einem Türrahmen, oder einer Innenausbauwand angeordnet und/oder integriert sein.

Die Versorgungseinheit 112 weist zumindest eine Kontakteinheit 114 auf. Die Kontakteinheit 114 ist zur elektronischen und/oder elektrischen Versorgung der Funktionseinheit 110 dazu vorgesehen, zumindest abhängig von einer Türposition 16, 18 kontaktiert zu werden und welche separat von der Türeinheit 14 und/oder der Funktionseinheit 110 ausgebildet ist. Die Kontakteinheit 114 ist an der Innenausbaudecke und zwar insbesondere im Bereich der zweiten Türposition 18 angeordnet. Die Kontakteinheit 114 weist zumindest zwei Kontaktelemente 118, 119 für die Versorgung mit einem elektrischen Signal auf. Ferner weist die Kontakteinheit 114 zumindest zwei weitere Kontaktelemente 130, 131 für die Versorgung mit einem elektronischen Signal auf. Die Kontaktelemente 130, 131 sind als Kontaktbuchsen ausgebildet. Denkbar ist, dass die Kontakteinheit an der Führungseinheit 28 zur beweglichen Führung der Türeinheit 14 angeordnet und/oder in die Führungseinheit integriert ist. Beispielsweise könnten die Kontaktelemente auch als Kontaktstifte und/oder Schleifkontakte ausgebildet sein.

Ferner weist die Versorgungseinheit 112 zumindest eine weitere Kontakteinheit 115 auf. Die weitere Kontakteinheit 115 ist zumindest im Wesentlichen identisch mit der Kontakteinheit 114 ausgebildet. Die weitere Kontakteinheit 115 ist versetzt zu der Kontakteinheit 114 angeordnet. Die weitere Kontakteinheit 115 ist an der Innenausbaudecke angeordnet und zwar insbesondere im Bereich der ersten Türposition 16 der Türeinheit 14.

Ferner weist die Versorgungseinheit 112 zumindest eine korrespondierende Kontakteinheit 116 auf. Die korrespondierende Kontakteinheit 116 ist korrespondierend zur Kontakteinheit 114 und der weiteren Kontakteinheit 115 ausgebildet. Dazu weist die korrespondierende Kontakteinheit 116 Kontaktstifte auf, welche korrespondierend zu der Kontaktbuchse der Kontakteinheit 114 und/oder der weiteren Kontakteinheit 115 ausgebildet sind. Die korrespondierende Kontakteinheit 116 ist im vorliegenden Fall an der Türeinheit 14 und zwar insbesondere an einer Oberseite, welche der Innenausbaudecke zugewandt ist, angeordnet. Genauer gesagt ist die korrespondierende Kontakteinheit 116 an dem ersten Türelement 20 der Türeinheit 14 angeordnet. Alternativ könnte die korrespondierende Kontakteinheit auch an der Funktionseinheit angeordnet sein und/oder zumindest teilweise in die Türeinheit und/oder die Funktionseinheit integriert sein.

Abhängig von der Position der Türeinheit 14, insbesondere der ersten Türposition 16 und/oder der zweiten Türposition 18 kontaktiert die korrespondierende Kontakteinheit 116 entweder die Kontakteinheit 114 oder die weitere Kontakteinheit 115, um die Funktionseinheit 110 mit dem elektrischen und/oder elektronischen Signal zu versorgen (vgl. Figuren 8a, 8b). In einer Position zwischen der ersten Türposition 16 und der zweiten Türposition 18 entsteht kein Kontakt zwischen der korrespondierenden Kontakteinheit 115 und einer der Kontakteinheiten 114, 115, weshalb für diesen Fall die Funktionseinheit 110 für diesen Fall nicht mit dem elektrischen und/oder elektronischen Signal versorgt wird.

Zu einer Leitung des elektrischen und/oder elektronischen Signals weist die Versorgungseinheit 112 jeweils einen Signalstrang 132, 134 auf. Die Versorgungseinheit 112 weist einen ersten Signalstrang 132 auf, welcher zu Leitung des elektrischen Signals vorgesehen ist. Der erste Signalstrang 132 ist in der Innenausbaudecke integriert. Der erste Signalstrang 132 ist mit der Kontakteinheit 114 verbunden. Der erste Signalstrang 132 ist mit der weiteren Kontakteinheit 115 verbunden. Der erste Signalstrang 132 ist mit der Energieversorgung 128 verbunden. Ferner weist die Versorgungseinheit 112 einen zweiten Signalstrang 134 auf, welcher zu Versorgung mit dem elektronischen Signal vorgesehen ist. Der zweite Signalstrang 134 ist in der Innenausbaudecke integriert. Der zweite Signalstrang 134 ist mit der Kontakteinheit 114 verbunden. Ferner ist der zweite Signalstrang 134 mit der weiterten Kontakteinheit 116 verbunden. Zudem ist der zweite Signalstrang 134 mit der Steuereinheit 126 verbunden.

Ferner weist die Versorgungseinheit 112 zumindest einen weiteren ersten Signalstrang 136 auf. Der weitere erste Signalstrang 136 ist in der Türeinheit 14 integriert. Der weitere erste Signalstrang 136 ist mit der korrespondierenden Kontakteinheit 116 verbunden. Ferner ist der weitere erste Signalstrang 136 mit der Funktionseinheit 110 verbunden. Ferner weist die Versorgungseinheit 112 zumindest einen weiteren zweiten Signalstrang 138 auf. Der weitere zweite Signalstrang 138 ist in der Türeinheit 14 integriert. Der weitere zweite Signalstrang 138 ist mit der korrespondierenden Kontakteinheit 116 verbunden. Der weitere zweite Signalstrang 138 ist mit der Funktionseinheit 110 verbunden.

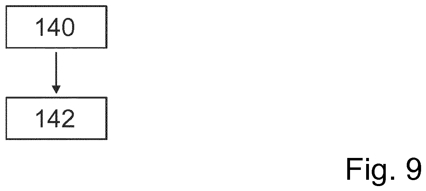

Figur 9 zeigt einen schematischen Ablaufplan eines beispielhaften Verfahrens zum Betrieb der Innenausbauvorrichtung.

Das Verfahren umfasst zumindest einen Verfahrensschritt 140. Die Türeinheit 14 befindet sich zunächst in der ersten Türposition 16. In der ersten Türposition 16 kontaktiert die weitere Kontakteinheit 115 die korrespondierende Kontakteinheit 116. Demnach versorgt die Versorgungseinheit 112 abhängig von der ersten Türposition 16 die Funktionseinheit 110 mit einem elektrischen und/oder elektronischen Signal. In dem Verfahrensschritt 140 wird die Türeinheit 14 aus der ersten Türposition 16 heraus bewegt. Daraufhin wird ein Kontakt zwischen der weiteren Kontakteinheit 115 und der korrespondierenden Kontakteinheit 116 aufgehoben.

Das Verfahren umfasst zumindest einen weiteren Verfahrensschritt 142. In dem weiteren Verfahrensschritt 142 wird die Türeinheit 14 in die zweite Türposition 18 bewegt. In der zweiten Türposition 18 kontaktiert die Kontakteinheit 114 die korrespondierende Kontakteinheit 116. Demnach versorgt die Versorgungseinheit 112 abhängig von der zweiten Türposition 18 die Funktionseinheit 110 mit einem elektrischen und/oder elektronischen Signal.

## Patentansprüche

1. Wohnfahrzeug (54) mit zumindest einer Innenausbauvorrichtung, mit zumindest einem ersten Raumbereich (10) und mit zumindest einem zweiten Raumbereich (12), wobei die Innenausbauvorrichtung wahlweise zu einer zumindest teilweisen Trennung des ersten Raumbereichs (10) und des zweiten Raumbereichs (12) vorgesehen ist, wobei die Innenausbauvorrichtung zumindest eine bewegbare Türeinheit (14) umfasst, welche von zumindest einer ersten Türposition (16) in zumindest eine zweite Türposition (18) bewegbar ist und welche zumindest ein erstes Türelement (20) und zumindest ein zweites Türelement (22), welches mit dem ersten Türelement (20) zumindest mittelbar gekoppelt ist, aufweist, wobei die Türeinheit (14) dazu vorgesehen ist, in der ersten Türposition (16) die Raumbereiche (10, 12) freizugeben und in der zweiten Türposition (18) zumindest teilweise den ersten Raumbereich (10) von dem zweiten Raumbereich (12) zu trennen,
wobei in der ersten Türposition (16) das zweite Türelement (22) relativ zum ersten Türelement (20) unbeweglich befestigt ist und in der zweiten Türposition (18) das zweite Türelement (22) relativ zum ersten Türelement (20) bewegbar ist, **dadurch gekennzeichnet, dass** die Innenausbauvorrichtung zumindest eine Befestigungseinheit (38) umfasst, welche zu einer von der Türposition (16, 18) abhängigen kraft- und/oder formschlüssigen Befestigung des zweiten Türelements (22) an dem ersten Türelement (20) vorgesehen ist.

2. Wohnfahrzeug (54) nach Anspruch 1, **dadurch gekennzeichnet, dass** die Türeinheit (14) von der ersten Türposition (16) in die zweite Türposition (18) durch zumindest eine Verschiebung der Türeinheit (14) in einer Richtung quer zu deren Haupterstreckungsebene überführbar ist.

3. Wohnfahrzeug (54) nach einem der vorhergehenden Ansprüche, **dadurch gekennzeichnet, dass** die Türeinheit (14) von der ersten Türposition (16) in die zweite Türposition (18) durch zumindest ein Verschwenken der Türeinheit (14) um eine Schwenkachse, welche zumindest im Wesentlichen parallel zu deren Haupterstreckungsebene orientiert ist, überführbar ist.

4. Wohnfahrzeug (54) nach einem der vorhergehenden Ansprüche, **dadurch gekennzeichnet, dass** die Innenausbauvorrichtung zumindest eine Führungseinheit (28) umfasst, welche zur Führung der Türeinheit (14) vorgesehen ist, wobei die Führungseinheit (28) zumindest ein erstes Führungselement (30) und zumindest ein zweites Führungselement (32) umfasst, welche zueinander parallel oder winklig angeordnet sind.

5. Wohnfahrzeug (54) nach einem der vorhergehenden Ansprüche, **dadurch gekennzeichnet, dass** die Befestigungseinheit (38) zumindest ein erstes Befestigungselement (40), welches an dem ersten Türelement (20) angeordnet ist und zumindest ein zu dem ersten Befestigungselement (40) korrespondierend ausgebildetes zweites Befestigungselement (42) umfasst, welches an dem zweiten Türelement (22) angeordnet ist, umfasst.

6. Wohnfahrzeug (54) nach einem der vorhergehenden Ansprüche, **dadurch gekennzeichnet, dass** die Innenausbauvorrichtung zumindest eine Auslöseeinheit (44) umfasst, die zumindest ein Auslöseelement (46) aufweist, welches dazu vorgesehen ist, abhängig von zumindest einer Türposition eine Befestigung des zweiten Türelements (22) mit dem ersten Türelement (20) aufzuheben.

7. Wohnfahrzeug (54) zumindest nach den Ansprüchen 4 und 6, **dadurch gekennzeichnet, dass** das Auslöseelement (46) mit zumindest einem Befestigungselement (40, 42) der Befestigungseinheit (38) in der zweiten Türposition (18) zu einer Aufhebung der Befestigung des ersten Türelements (29) und des zweiten Türelements (22) zusammenwirkt.

8. Wohnfahrzeug (54) nach Anspruch 6 oder 7, **dadurch gekennzeichnet, dass** das Auslöseelement (46) zumindest eine Anlaufschräge (48) aufweist.

9. Wohnfahrzeug (54) nach einem der vorhergehenden Ansprüche, **dadurch gekennzeichnet, dass** die Innenausbauvorrichtung zumindest eine Fixiereinheit (50) umfasst, welche dazu vorgesehen ist, die Türeinheit (14) in zumindest einer Türposition (16, 18) zu fixieren.

10. Wohnfahrzeug (54) nach Anspruch 9, **dadurch gekennzeichnet, dass** die Fixiereinheit (50) dazu vorgesehen ist, bei einer Verschiebung des zweiten Türelements (22) relativ zum ersten Türelement (20), auszulösen um die Türeinheit (14) in der zweiten Türposition (18) zu fixieren.

11. Wohnfahrzeug (54) nach einem der vorhergehenden Ansprüche, **dadurch gekennzeichnet, dass** die Innenausbauvorrichtung zumindest ein weiteres Türelement (52) umfasst, welches separat von der Türeinheit (14) ausgebildet ist.

12. Wohnfahrzeug (54) nach Anspruch 11, **dadurch gekennzeichnet, dass** das weitere Türelement (52) in der ersten Türposition (16) zumindest teilweise von der Türeinheit (14) verdeckt angeordnet ist.

13. Wohnfahrzeug (54) nach Anspruch 11 oder 12, **dadurch gekennzeichnet, dass** das weitere Türelement (52) in der zweiten Türposition (18) von der Türeinheit (14) frei gegeben ist.

14. Wohnfahrzeug (54) nach Anspruch 11 oder 12, **dadurch gekennzeichnet, dass** das weitere Türelement (52) zumindest in der zweiten Türposition (18) zumindest teilweise zur Trennung des ersten Raumbereichs (10) von dem zweiten Raumbereich (12) vorgesehen ist.

15. Verfahren zur wahlweise zumindest teilweisen Trennung eines ersten Raumbereichs (10) und eines zweiten Raumbereichs (12) eines Wohnfahrzeugs (54) mit zumindest einer Innenausbauvorrichtung, insbesondere eines Wohnfahrzeugs (54) nach einem der Ansprüche 1 bis 14, bei welchem in zumindest einem Verfahrensschritt zumindest eine Türeinheit (14), welche zumindest ein erstes Türelement (20) und zumindest ein zweites Türelement (22) umfasst, welches zumindest mittelbar mit dem ersten Türelement (20) gekoppelt ist, von einer ersten Türposition (16), in der die Raumbereiche (10, 12) freigegeben werden, in zumindest eine zweite Türposition (18) bewegt wird, in der der erste Raumbereich (10) zumindest teilweise von dem zweiten Raumbereich (12) getrennt wird, wobei, in der ersten Türposition (16) das zweite Türelement (22) relativ zum ersten Türelement (20) unbeweglich befestigt wird, wobei in der zweiten Türposition (18) das zweite Türelement (22) relativ zum ersten Türelement (20) bewegbar wird, **dadurch gekennzeichnet, dass** die Innenausbauvorrichtung zumindest eine Befestigungseinheit (38) umfasst, welche zu einer von der Türposition (16, 18) abhängigen kraft- und/oder formschlüssigen Befestigung deszweiten Türelements (22) an dem ersten Türelement (20) vorgesehen ist.

## Claims

1. Habitation vehicle (54) with at least one interior construction device, with at least one first spatial region (10) and with at least one second spatial region (12),
the interior construction device being configured optionally for an at least partial separation of the first spatial region (10) and the second spatial region (12),
the interior construction device comprising at least one movable door unit (14), which is movable from at least one first door position (16) into at least one second door position (18) and which comprises at least one first door element (20) and at least one second door element (22) that is at least indirectly coupled with the first door element (20),
the door unit (14) being configured to release the spatial regions (10, 12) in the first door position (16) and to at least partly separate the first spatial region (10) from the second spatial region (12) in the second door position (18),
wherein in the first door position (16) the second door element (22) is fixated immovably relative to the first door element (20) and in the second door position (18) the second door element (22) is movable relative to the first door element (20),
**characterised in that** the interior construction device comprises at least one fixation unit (38), which is configured, depending on the door position (16, 18), for a force-fit and/or form-fit fixation of the second door element (22) to the first door element (20).

2. Habitation vehicle (54) according to claim 1,
**characterised in that** the door unit (14) is transferable from the first door position (16) into the second door position (18) by at least one displacement of the door unit (14) in a direction that is transverse to the main extension plane of the door unit (14).

3. Habitation vehicle (54) according to one of the preceding claims,
**characterised in that** the door unit (14) is transferable from the first door position (16) into the second door position (18) by at least one pivoting of the door unit (14) around a pivot axis which is oriented at least substantially parallel to the main extension plane of the door unit (14).

4. Habitation vehicle (54) according to one of the preceding claims,
**characterised in that** the interior construction device comprises at least one guiding unit (28), which is configured for guiding the door unit (14), the guiding unit (28) comprising at least one first guiding element (30) and at least one second guiding element (32), which are arranged parallel or at an angle to one another.

5. Habitation vehicle (54) according to one of the preceding claims,
**characterised in that** the fixation unit (38) comprises at least one first fixation element (40), which is arranged on the first door element (20), and at least one second fixation element (42), which is implemented so as to correspond to the first fixation element (40) and is arranged on the second door element (22).

6. Habitation vehicle (54) according to one of the preceding claims,
**characterised in that** the interior construction device includes at least one trigger unit (44) comprising at least one trigger element (46) which is configured, depending on at least one door position, to undo a fixation of the second door element (22) to the first door element (20).

7. Habitation vehicle (54) at least according to claims 4 and 6,
**characterised in that** in the second door position (18) the trigger element (46) cooperates with at least one fixation element (40, 42) of the fixation unit (38) for the purpose of undoing the fixation of the first door element (20) and the second door element (22).

8. Habitation vehicle (54) according to claims 6 and 7,
**characterised in that** the trigger element (46) comprises at least one start-up slope (48).

9. Habitation vehicle (54) according to one of the preceding claims,
**characterised in that** the interior construction device comprises at least one retaining unit (50), which is configured to fixate the door unit (14) in at least one door position (16, 18).

10. Habitation vehicle (54) according to claim 9,
**characterised in that** the retaining unit (50) is configured to deploy in case of a displacement of the second door element (22) relative to the first door element (20) in order to fixate the door unit (14) in the second door position (18).

11. Habitation vehicle (54) according to one of the preceding claims,
**characterised in that** the interior construction device comprises at least one further door element (52), which is implemented separately from the door unit (14).

12. Habitation vehicle (54) according to claim 11,
**characterised in that** the further door element (52) is in the first door position (16) arranged so as to be at least partly covered by the door unit (14).

13. Habitation vehicle (54) according to claim 11 or 12,
**characterised in that** the further door element (52) is in the second door position (18) released from the door unit (14).

14. Habitation vehicle (54) according to claim 11 or 12,
**characterised in that** the further door element (52) is in the second door position (18) configured at least partly for a separation of the first spatial region (10) from the second spatial region (12).

15. Method for an optionally at least partial separation of a first spatial region (10) and a second spatial region (12) of a habitation vehicle (54) with at least one interior construction device according to one of claims 1 to 14,
in which in at least one method step at least one door unit (14), which comprises at least one first door element (20) and at least one second door element (22) that is at least indirectly coupled with the first door element (20), is moved from a first door position (16), in which the spatial regions (10, 12) are released, into at least one second door position (18), in which the first spatial region (10) is at least partly separated from the second spatial region (12),
wherein in the first door position (16) the second door element (22) is fixated immovably relative to the first door element (20),
wherein in the second door position (18) the second door element (22) becomes movable relative to the first door element (20),
**characterised in that** the interior construction device comprises at least one fixation unit (38), which is configured for a force-fit and/or form-fit fixation of the second door element (22) to the first door element (20) depending on the door position (16, 18).

## Revendications

1. Véhicule d'habitation (54) avec au moins un dispositif d'aménagement intérieur, avec au moins une première zone spatiale (10) et avec au moins une deuxième zone spatiale (12),
le dispositif d'aménagement intérieur étant destiné optionnellement pour une séparation de la première zone spatiale (10) et la deuxième zone spatiale (12),
le dispositif d'aménagement intérieur comportant au moins une unité de portière mouvable (14) qui peut être mue d'au moins une première position de portière (16) dans au moins une deuxième position de portière (18) et qui comprend au moins un premier élément de portière (20) et au moins un deuxième élément de portière (22) couplé au moins indirectement avec le premier élément de portière (20), l'unité de portière (14) étant prévue à relâcher les zones spatiales (10, 12) dans la première position de portière (16) et à au moins partiellement séparer la première zone spatiale (10) de la deuxième zone spatiale (12) dans la deuxième position de portière (18),
où dans la première position de portière (16) le deuxième élément de portière (22) est fixé immobilement par rapport au premier élément de portière (20), et dans la deuxième position de portière (18) le deuxième élément de portière (22) est mouvable par rapport au premier élément de portière (20),
**caractérisé en ce que** le dispositif d'aménagement intérieur comprend au moins une unité de fixement (38) qui est configurée pour un fixement en liaison de force et/ou liaison de forme du deuxième élément de portière (22) au premier élément de portière (20), en dépendance à une position de portière (16, 18).

2. Véhicule d'habitation (54) selon la revendication 1,
**caractérisé en ce que** l'unité de portière (14) peut être transférée de la première position de portière (16) dans la deuxième position de portière (18) par au moins un déplacement de l'unité de portière (14) dans une direction transversale au plan d'étendue principale de ladite unité de portière (14).

3. Véhicule d'habitation (54) selon l'une des revendications précédentes,
**caractérisé en ce que** l'unité de portière (14) peut être transférée de la première position de portière (16) dans la deuxième position de portière (18) par au moins un pivotement de l'unité de portière (14) autour d'un axe de pivotement qui est orienté au moins sensiblement en parallèle au plan d'étendue principale de l'unité de portière (16).

4. Véhicule d'habitation (54) selon l'une des revendications précédentes,
**caractérisé en ce que** le dispositif d'aménagement intérieur comprend au moins une unité de guidage (28) qui est prévue à guider l'unité de portière (14), l'unité de guidage (28) comprenant au moins un premier élément de guidage (30) et au moins un deuxième élément de guidage (32), qui sont disposés en parallèle ou incluent un angle l'un avec l'autre.

5. Véhicule d'habitation (54) selon l'une des revendications précédentes,
**caractérisé en ce que** l'unité de fixement (38) comprend au moins un premier élément de fixement (40) disposé sur le premier élément de portière (20) et au moins un deuxième élément de fixement (42) réalisé en correspondance au premier élément de fixement (40) et disposé sur le deuxième élément de portière (22).

6. Véhicule d'habitation (54) selon l'une des revendications précédentes,
**caractérisé en ce que** le dispositif d'aménagement intérieur comprend au moins une unité de déclenchement (44) incluant au moins un élément de déclenchement (46) qui est configuré, en dépendance à au moins une position de portière, à défaire un fixement du deuxième élément de portière (22) avec le premier élément de portière (20).

7. Véhicule d'habitation (54) au moins selon les revendications 4 et 6,
**caractérisé en ce que** dans la deuxième position de portière (18) l'élément de déclenchement (46) coopère avec au moins un élément de fixement (40, 42) de l'unité de fixement (38) pour défaire le fixement du premier élément de portière (20) et du deuxième élément de portière (22).

8. Véhicule d'habitation (54) selon la revendication 6 ou 7,
**caractérisé en ce que** l'élément de déclenchement (46) comporte au moins une pente de démarrage (48).

9. Véhicule d'habitation (54) selon l'une des revendications précédentes,
**caractérisé en ce que** le dispositif d'aménagement intérieur comporte au moins une unité de retenue (50) prévue à fixer l'unité de portière (14) dans au moins une position de portière (16, 18).

10. Véhicule d'habitation (54) selon la revendication 9,
**caractérisé en ce que** l'unité de retenue (50) est prévue à déclencher en cas d'un déplacement du deuxième élément de portière (22) par rapport au premier élément de portière (20) pour fixer l'unité de portière (14) dans la deuxième position de portière (18).

11. Véhicule d'habitation (54) selon l'une des revendications précédentes,
**caractérisé en ce que** le dispositif d'aménagement intérieur comprend au moins un élément de portière de plus (52), qui est réalisé séparément de l'unité de portière (14).

12. Véhicule d'habitation (54) selon la revendication 11,
**caractérisé en ce que** dans la première position de portière (16) l'élément de portière de plus (52) est disposé d'une telle manière qu'il est au moins partiellement couvert par l'unité de portière (14).

13. Véhicule d'habitation (54) selon la revendication 11 ou 12,
**caractérisé en ce que** dans la deuxième position de portière (18) l'élément de portière de plus (52) est relâché de l'unité de portière (14).

14. Véhicule d'habitation (54) selon la revendication 11 ou 12,
**caractérisé en ce qu'**au moins dans la deuxième position de portière (18) l'élément de portière de plus (52) est prévu au moins partiellement pour une séparation de la première zone spatiale (10) de la deuxième zone spatiale (12).

15. Procédé pour une séparation optionnelle, au moins partielle, d'une première zone spatiale (10) et une deuxième zone spatiale (12) d'un véhicule d'habitation (54) ayant au moins un dispositif d'aménagement intérieur, en particulier d'un véhicule d'habitation (54) selon l'une des revendications 1 à 14,
dans lequel en au moins une première étape de procédé au moins une unité de porte (14), qui comprend au moins un premier élément de portière (20) et au moins un deuxième élément de portière (22) couplé au moins indirectement avec le premier élément de portière (20), est mouvée d'une première position de portière (16), en laquelle les zones spatiales (10, 12) sont relâchées, dans au moins une deuxième position de portière (18), en laquelle la première zone spatiale (10) est séparée au moins partiellement de la deuxième zone spatiale (12),
où dans la première position de portière (16) le deuxième élément de portière (22) est fixé immobilement par rapport au premier élément de portière (20),
où dans la deuxième position de portière (18) le deuxième élément de portière (22) devient mobile par rapport au premier élément de portière (20),
**caractérisé en ce que** le dispositif d'aménagement intérieur comprend au moins une unité de fixement (38) prévue pour un fixement en liaison de force et/ou liaison de forme du deuxième élément de portière (22) au premier élément de portière (20) en dépendance à la position de portière (16, 18).
